(19) Europäisches Patentamt
European Patent Office
Office européen des brevets

(11) EP 2 716 713 B1

(12) **EUROPEAN PATENT SPECIFICATION**

(45) Date of publication and mention of the grant of the patent:
**22.02.2017 Bulletin 2017/08**

(21) Application number: **12792978.4**

(22) Date of filing: **28.05.2012**

(51) Int Cl.:
***C08G 77/448*** *(2006.01)* ***C08K 5/52*** *(2006.01)*
***C08L 83/10*** *(2006.01)* ***H01M 2/02*** *(2006.01)*
***C08L 69/00*** *(2006.01)* ***H01M 2/10*** *(2006.01)*

(86) International application number:
**PCT/JP2012/063627**

(87) International publication number:
**WO 2012/165373 (06.12.2012 Gazette 2012/49)**

(54) **BATTERY PACK MADE OF A POLYCARBONATE RESIN COMPOSITION AND USE OF THE POLYCARBONATE RESIN COMPOSITION FOR A BATTERY PACK**

BATTERIEPACK AUS EINER POLYCARBONATHARZZUSAMMENSETZUNG UND VERWENDUNG EINER POLYCARBONATHARZZUSAMMENSETZUNG FÜR EINEN BATTERIEPACK

BLOC-BATTERIE À BASE D'UNE COMPOSITION DE RÉSINE DE POLYCARBONATE ET UTILISATION D'UNE COMPOSITION DE RÉSINE DE POLYCARBONATE POUR UN BLOC-BATTERIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.05.2011 JP 2011120551**

(43) Date of publication of application:
**09.04.2014 Bulletin 2014/15**

(73) Proprietor: **Idemitsu Kosan Co., Ltd**
**Tokyo 100-8321 (JP)**

(72) Inventors:
- **ISHIKAWA, Yasuhiro**
**Ichihara-shi**
**Chiba 299-0193 (JP)**
- **AOKI, Yusuke**
**Ichihara-shi**
**Chiba 299-0193 (JP)**
- **TANAKA, Takayoshi**
**Ichihara-shi**
**Chiba 299-0193 (JP)**

(74) Representative: **Hoffmann Eitle**
**Patent- und Rechtsanwälte PartmbB**
**Arabellastraße 30**
**81925 München (DE)**

(56) References cited:
**WO-A1-2011/030772**
**JP-A- 2011 021 127**
**JP-A- 2011 102 364**
**US-A1- 2006 135 737**
**US-A1- 2010 233 603**

- **DATABASE WPI Week 201109 Thomson Scientific, London, GB; AN 2011-A97523 XP002730226, -& WO 2011/007673 A1 (IDEMITSU KOSAN CO LTD) 20 January 2011 (2011-01-20)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 716 713 B1

## Description

### Technical Field

The present invention relates to a battery pack of a polycarbonate resin composition that provides a battery pack excellent in drop impact strength under a low-temperature environment, flame retardancy, and heat resistance, and a battery pack having the properties.

### Background Art

A polycarbonate resin is excellent in mechanical strength, electrical characteristics, transparency, and the like, and hence has been widely utilized as an engineering plastic in various fields such as the field of electrical and electronic equipment, and the field of an automobile. Further, the polycarbonate resin has been utilized in the casing of a battery pack to be used in, for example, a mobile phone, a mobile personal computer, a digital camera, a video camera, or an electric power tool.

Meanwhile, a drop impact strength at an environmental temperature has recently been required in association with changes in UL standards of a battery pack. Accordingly, a battery pack to be connected to the outside of equipment typified by the battery pack of a video camera or electric power tool needs to have a drop impact strength under low temperatures.

The polycarbonate resin or a flame-retardant polycarbonate resin improved in flame retardancy has been utilized as a battery pack material in recent years. For example, the following resin compositions have been disclosed: a resin composition excellent in flame retardancy and flowability obtained by blending a mixture of a polycarbonate and a composite rubber-based graft copolymer with a halogen-free phosphate-based flame retardant and a polytetrafluoroethylene (see Patent Document 1), a resin composition excellent in flame retardancy and drop impact strength obtained by blending a polycarbonate, a metal sulfonate, and a multilayer structure polymer having an inner core formed of a diene-based rubber-like polymer and an outermost shell formed of a vinyl-based copolymer (see Patent Document 2), and a resin composition excellent in heat resistance and flame retardancy obtained by blending a polycarbonate, an ethylene-(meth)acrylic acid copolymer and/or an ester compound thereof, and an organic alkaline metal salt (see Patent Document 3).

However, when a drop impact strength under a use environment temperature is required as described above, the following problem arises. The resin compositions are each poor in drop impact strength under a low-temperature environment like a winter season or a cold district.

Meanwhile, a portable electronic equipment casing that is thin and excellent in drop impact resistance, flowability, and heat resistance (see Patent Document 4) has been known. However, its application to a battery pack has not been known.

A method involving bonding an upper case and a lower case through ultrasonic welding is generally employed for a battery pack (see Patent Document 5). At that time, burrs are produced by the ultrasonic welding, though their amount is small. A burr potion is generally responsible for the occurrence of a notch. Accordingly, the battery pack cases having the burrs produced by the heat forming or ultrasonic welding of the cases are liable to undergo destruction starting from the produced notch portion as a starting point.

In view of the foregoing, a material that can resist impact under a low-temperature environment even in the presence of a notch and has flame retardancy which a product is required to have has started to be required as a battery pack material.

### Citation List

#### Patent Document

[Patent Document 1] JP 11-21441 A
[Patent Document 2] JP 11-293103 A
[Patent Document 3] JP 2004-35661 A
[Patent Document 4] JP 2011-21127 A
[Patent Document 5] JP 2006-12657 A

Summary of Invention

Technical Problem

The present invention has been made under such circumstances, and an object of the present invention is to provide a material for a battery pack excellent in drop impact strength under a low-temperature environment, flame retardancy, and heat resistance, and a battery pack having the properties.

Solution to Problem

The inventors of the present invention have made extensive studies to achieve the object. As a result, the inventors have found that a resin composition containing a predetermined amount of a phosphorus-based antioxidant with respect to a polycarbonate-based resin containing, at a specific ratio, a polycarbonate-polyorganosiloxane copolymer containing a polyorganosiloxane block formed of a specific structural unit at a predetermined ratio and an aromatic polycarbonate except the copolymer is adaptable to the object. In addition, the inventors have found that a battery pack formed by using the resin composition is excellent in drop impact strength under a low-temperature environment, flame retardancy, and heat resistance. The present invention has been completed on the basis of such findings.

That is, the present invention according to item 1 provides a battery pack formed by using the composition.

A battery pack comprising an upper case and a lower case wherein the upper case and the lower case are bonded through ultrasonic welding of a polycarbonate resin composition, comprising:100 parts by mass of (A) a polycarbonate-based resin composed of 5 to 100 mass% of a polycarbonate-polyorganosiloxane copolymer (A-1) whose main chain is formed of a structural unit represented by the general formula (I) and a structural unit represented by the general formula (II), and that contains 2 to 10 mass% of a polyorganosiloxane block, and 0 to 95 mass% of an aromatic polycarbonate (A-2) except the copolymer (A-1):

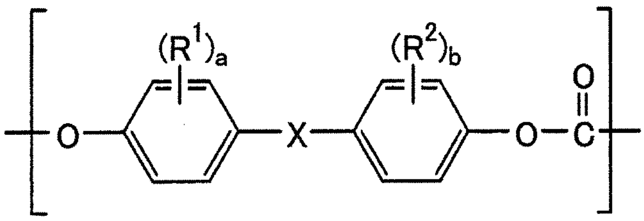

(I)

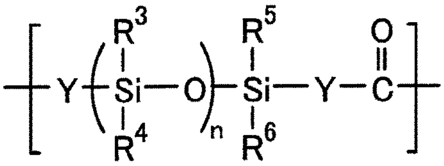

(II)

wherein the structural unit represented by the general formula (I) is a structural unit derived from bisphenol A, R3 to R6 each independently represent a hydrogen atom, a halogen atom, an alkyl group having 1 to 6 carbon atoms, an alkoxy group having 1 to 6 carbon atoms, or an aryl group having 6 to 12 carbon atoms, Y represents an organic residue from allyl phenol or eugenol, n represents an average repeating number and represents an integer of 20 to 600, and 0.01 to 1 parts by mass of (B) a phosphorus-based antioxidant.

2. The battery pack according to item 1, in which both of $R^3$ and $R^4$ in the structural unit represented by the general formula (II) represent methyl groups.
3. The battery pack according to any one of the items 1 or 2, further including 0.01 to 0.15 parts by mass of (C) an alkali metal salt and/or alkaline earth metal salt of an organosulfonic acid, and/or 0.1 to 1 parts by mass of (D) a mixed powder composed of polytetrafluoroethylene particles and organic polymer particles.
4. Use of a polycarbonate resin composition as defined in any one of the items 1 to 3 for a battery pack.

Advantageous Effects of Invention

According to the present invention, there can be provided a battery pack excellent in drop impact strength under a low-temperature environment, flame retardancy, and heat resistance, and a battery pack having the properties.

Brief Description of Drawings

FIG. 1 is a dimension diagram of an injection-molded article of a polycarbonate resin composition of the present invention, the molded article being used in a performance evaluation.

FIG. 2 is a dimension diagram of an injection-molded article of the polycarbonate resin composition of the present invention, the molded article being used in a drop impact resistance test.

FIG. 3 is a diagram illustrating a positional relationship between an injection-molded article of the polycarbonate resin composition of the present invention and a burner in the flame retardancy evaluation test of the molded article.

Description of Embodiments

First, a polycarbonate resin composition for a battery pack of the present invention is described.

[Polycarbonate resin composition for battery pack]

A polycarbonate resin composition for a battery pack of the present invention comprises: (A) a polycarbonate-based resin composed of a polycarbonate-polyorganosiloxane copolymer (hereinafter sometimes abbreviated as "PC-PDMS copolymer") (A-1) whose main chain is formed of a structural unit represented by the following general formula (I) and a structural unit represented by the following general formula (II), and that contains a polyorganosiloxaneblock, andanaromaticpolycarbonate (A-2) except the copolymer (A-1); and (B) a phosphorus-based antioxidant.

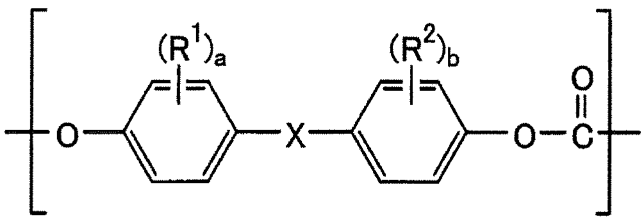
(I)

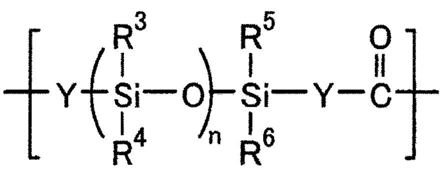
(II)

(In the formulae, $R^1$ to $R^6$, X, Y, n, a, and b each have the same meaning as that described in the foregoing.)

The polycarbonate resin composition for a battery pack of the present invention preferably further comprises (C) an alkali metal salt and/or alkaline earth metal salt of an organosulfonic acid, and/or (D) a mixed powder composed of polytetrafluoroethylene particles and organic polymer particles.

Hereinafter, each component in the polycarbonate resin composition for a battery pack of the present invention is described.

[PC-PDMS copolymer (A-1)]

The PC-PDMS copolymer to be used in the present invention contains the structural units represented by the general formulae (I) and (II). The content of a polyorganosiloxane block moiety having the structural unit represented by the general formula (II) needs to be 2 to 10 mass% in the PC-PDMS copolymer (A-1), and is preferably 3 to 7 mass%, more preferably 3 to 5 mass%. When the content of the block moiety is less than 2 mass%, an effect on notch sensitivity is small and an improving effect on a drop impact strength is insufficient. When the content exceeds 10 mass%, heat resistance reduces to a large extent.

The chain length of the polyorganosiloxane block moiety having the structural unit represented by the general formula (II) is 20 to 600, preferably 30 to 300, more preferably 50 to 300. When the chain length is less than 20, the effect on the notch sensitivity is small and the improving effect on the drop impact strength is insufficient. When the chain length exceeds 600, it becomes difficult to handle in producing the PC-PDMS copolymer (A-1), which results in poor

economical efficiency.

In addition, as large a viscosity-average molecular weight as possible of the PC-PDMS copolymer (A-1) is generally effective for improving the notch sensitivity and expressing drop impact resistance. However, increasing the viscosity-average molecular weight makes it difficult to mold a thin member like a battery pack.

Increasing a molding temperature can reduce the viscosity of the resin composition. In that case, however, a molding cycle lengthens, which results in poor economical efficiency. In addition, excessively increasing the temperature leads to a reduction in production stability due to the heat deterioration of the resin composition.

Therefore, the viscosity-average molecular weight of the PC-PDMS copolymer (A-1) is preferably 15,000 to 24,000, more preferably 16,000 to 22,500, still more preferably 17, 000 to 21,000.

When the viscosity-average molecular weight is 15, 000 or more, the strength of a molded article is sufficient. When the viscosity-average molecular weight is 24, 000 or less, the viscosity of the copolymer reduces, and hence productivity at the time of the production improves and it gives an excellent thin wall molding.

The PC-PDMS copolymer (A-1) is obtained by copolymerizing a dihydric phenol represented by the following general formula (1), a polyorganosiloxane represented by the following general formula (2), and phosgene, a carbonate, or a chloroformate.

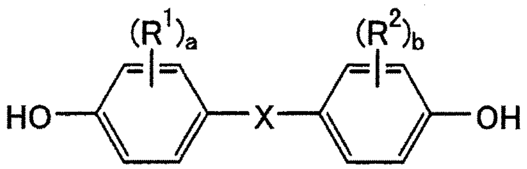 (1)

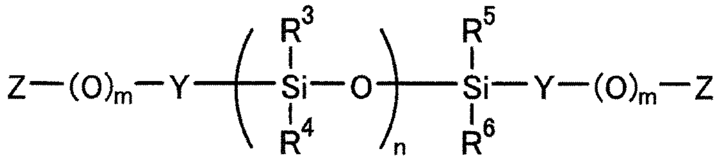 (2)

Here, in the general formula (1), $R^1$ and $R^2$, X, and a and b are identical to those of the general formula (I), and in the general formula (2), $R^3$ to $R^6$, Y, and n are identical to those of the general formula (II), m represents 0 or 1, Z represents a halogen, $-R^7OH$, $-R^7COOH$, $-R^7NH_2$, -COOH, or -SH, and $R^7$ represents a linear, branched, or cyclic alkylene group, an aryl-substituted alkylene group, an aryl-substituted alkylene group that may have an alkoxy group on a ring thereof, or an arylene group.

In the polycarbonate resin composition for a battery pack of the present invention, the dihydric phenol represented by the general formula (1) to be used as a raw material for the PC-PDMS copolymer (A-1) is 2,2-bis(4-hydroxyphenyl)propane (trivial name: bisphenol A). When bisphenol A is used as the dihydric phenol, the PC-PDMS copolymer in which X represents an isopropylidene group and a=b=0 in the general formula (I) is obtained.

As a dihydric phenol other than bisphenol A, there are given, for example: bis(hydroxyaryl)alkanes such as bis(4-hydroxyphenyl)methane, 1,1-bis(4-hydroxyphenyl)ethane, 2,2-bis(4-hydroxyphenyl)butane, 2,2-bis(4-hydroxyphenyl)octane, bis(4-hydroxyphenyl)phenylmethane, bis(4-hydroxyphenyl) diphenylmethane, 2,2-bis(4-hydroxy-3-methylphenyl)propane, bis(4-hydroxyphenyl)naphthylmethane, 1,1-bis(4-hydroxy-t-buthylphenyl)propane, 2,2-bis(4-hydroxy-3-bromophenyl)propane, 2,2-bis(4-hydroxy-3,5-dimethylphenyl)propane, 2,2-bis(4-hydroxy-3-chlorophenyl)propane, 2,2-bis(4-hydroxy-3,5-dichlorophenyl)propane, and 2,2-bis(4-hydroxy-3,5-dibromophenyl) propane; bis(hydroxyaryl)cycloalkanes such as 1,1-bis(4-hydroxyphenyl)cyclopentane, 1,1-bis(4-hydroxyphenyl)cyclohexane, 1,1-bis(4-hydroxyphenyl)-3,5,5-trimethylcyclohexane, 2,2-bis (4-hydroxyphenyl)norbornane, and 1,1-bis(4-hydroxyphenyl) cyclododecane; dihydroxyaryl ethers such as 4, 4 ' -dihydroxydiphenyl ether and 4,4'-dihydroxy-3,3'-dimethylphenyl ether; dihydroxydiaryl sulfides such as 4,4'-dihydroxydiphenyl sulfide and 4,4'-dihydroxy-3,3'-dimethyldiphenyl sulfide; dihydroxydiaryl sulfoxides such as 4,4'-dihydroxydiphenyl sulfoxide and 4,4'-dihydroxy-3,3'-dimethyldiphenyl sulfoxide; dihydroxydiaryl sulfones such as 4,4'-dihydroxydiphenyl sulfone and 4,4'-dihydroxy-3,3'-dimethyldiphenyl sulfone; dihydroxydiphenyls such as 4,4'-dihydroxydiphenyl; dihydroxydiarylfluorenes such as 9,9-bis(4-hydroxyphenyl)fluorene and 9,9-bis(4-hydroxy-3-methylphenyl)fluorene; dihydroxydiaryladamantanes such as 1,3-bis(4-hydroxyphenyl)adamantane, 2,2-bis(4-hydroxyphenyl) adamantane, and 1,3-bis(4-hydroxyphenyl)-5,7-dimethyladamantane; 4,4'-[1,3-phenylenebis(1-methylethylidene)]bisphenol; 10,10-bis (4-hydroxyphenyl)-9-anthrone; and 1,5-bis(4-hydroxyphenylthio) -2,3-dioxapentaene.

Those dihydric phenols may each be used alone or as a mixture of two or more.

The polyorganosiloxane represented by the general formula (2) can be easily produced by subjecting a terminal

of the polyorganosiloxane chain having a predetermined polymerization degree n to a hydrosilylation reaction with a phenol having an olefinic unsaturated carbon-carbon bond, which are allylphenol, eugenol. Thus, Y in the general formula (II) of the component (A-1) represents an organic residue derived from allylphenol or eugenol.

The polyorganosiloxane represented by the general formula (2) is preferably such that both of $R^3$ and $R^4$ represent methyl groups, and examples thereof include compounds represented by the following general formulae (3) to (11).

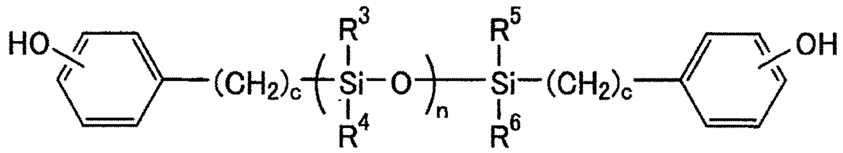

(3)

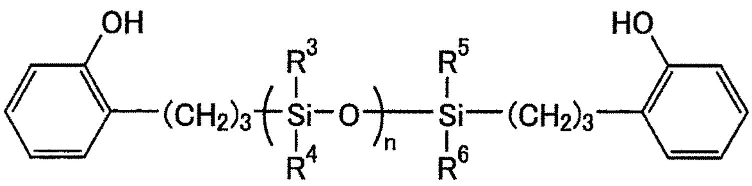

(4)

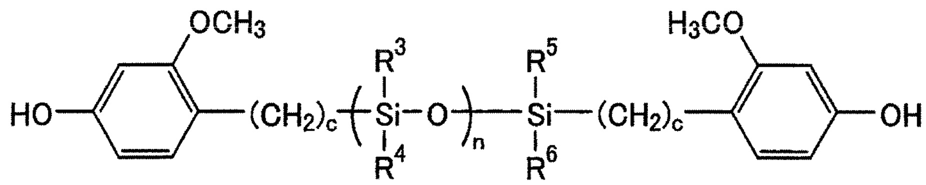

(5)

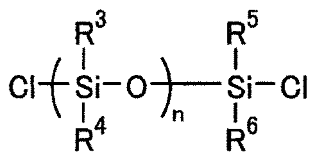

(6)

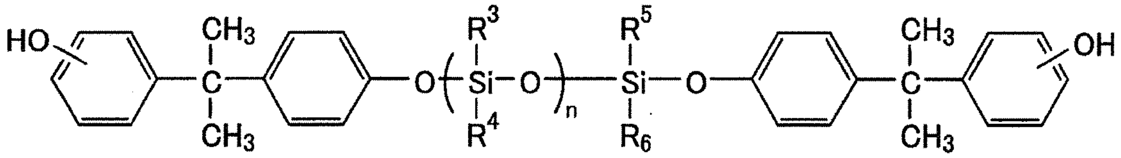

(7)

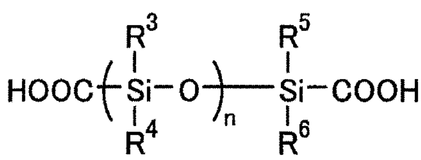

(8)

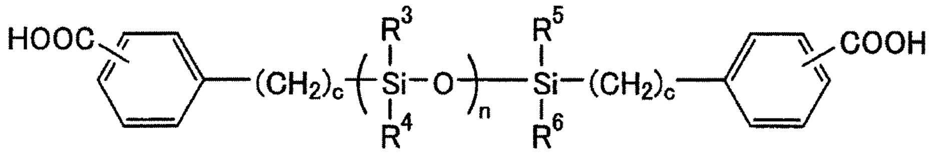

(9)

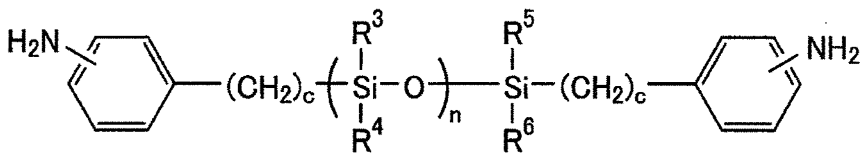

(10)

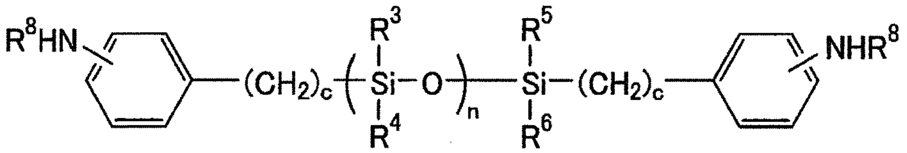

(11)

In the general formulae (3) to (11), $R^3$ to $R^6$ each independently represent a hydrogen atom, a halogen atom, an alkyl group having 1 to 6 carbon atoms, an alkoxy group having 1 to 6 carbon atoms, or an aryl group having 6 to 12 carbon atoms as in the general formula (II), n represents an average repeating number of organosiloxane constituent units and represents a number of 20 to 600, $R^8$ represents an alkyl, alkenyl, aryl, or aralkyl group, and c represents a positive integer, typically an integer of 1 to 6.

Of those, a phenol-modified polyorganosiloxane represented by the general formula (3) is preferred in terms of its ease of polymerization, and an α,ω-bis[3-(o-hydroxyphenyl)propyl] polydimethylsiloxane as one kind of compounds represented by the general formula (4) or an α,ω-bis[3-(4-hydroxy-2-methoxyphenyl) propyl]polydimethylsiloxane as one kind of compounds represented by the general formula (5) is preferred in terms of its ease of availability.

The phenol-modified polyorganosiloxane can be produced by a known method. The production method is, for example, as described below.

First, cyclotrisiloxane and disiloxane are caused to react with each other in the presence of an acid catalyst to synthesize an α,ω-dihydrogen organopolysiloxane. At this time, an α,ω-dihydrogen organopolysiloxane having a desired average repeating unit can be synthesized by changing a loading ratio between cyclotrisiloxane and disiloxane. Next, the α,ω-dihydrogen organopolysiloxane is subj ected to an addition reaction with a phenol compound having an unsaturated aliphatic hydrocarbon group such as allylphenol or eugenol in the presence of a catalyst for a hydrosilylation reaction. Thus, the phenol-modified polyorganosiloxane having a desired average repeating unit can be produced.

In addition, at this stage, a low-molecular weight, cyclic polyorganosiloxane and an excess amount of the phenol compound remain as impurities. Accordingly, those low-molecular weight compounds are removed by distillation with heating under reduced pressure.

[Aromatic polycarbonate (A-2) except the component (A-1)]

Used as the component (A-2) as the aromatic polycarbonate except the component (A-1) in the polycarbonate resin composition for a battery pack of the present invention is an aromatic polycarbonate obtained by a conventional method of producing an aromatic polycarbonate such as: an interfacial polymerization method involving causing a dihydric phenol-based compound and phosgene to react with each other in the presence of a reaction-inert organic solvent and an alkaline aqueous solution, and adding a polymerization catalyst such as a tertiary amine or a quaternary ammonium salt to the resultant to polymerize; or a pyridine method involving dissolving the dihydric phenol-based compound in pyridine or a mixed solution of pyridine and an inert solvent, and introducing phosgene to directly produce the aromatic polycarbonate.

Examples of the dihydric phenol-based compound to be used in the production of the aromatic polycarbonate as the component (A-2) include: bis(hydroxyaryl)alkanes such as 2,2-bis(4-hydroxyphenyl) propane (trivial name: bisphenol A), bis(4-hydroxyphenyl)methane, 1,1-bis(4-hydroxyphenyl)ethane, 2,2-bis(4-hydroxyphenyl)butane, 2,2-bis(4-hydroxyphenyl)octane, bis(4-hydroxyphenyl) phenylmethane, bis(4-hydroxyphenyl)diphenylmethane, 2,2-bis(4-hydroxy-3-methylphenyl)propane, bis(4-hydroxyphenyl) naphthylmethane, 1,1-bis(4-hydroxy-3-t-butylphenyl)propane, 2,2-bis(4-hydroxy-3-bromophenyl)propane, 2,2-bis(4-hydroxy-3,5-dimethylphenyl)propane, 2,2-bis(4-hydroxy-3-chlorophenyl) propane, 2,2-bis(4-hydroxy-3,5-dichlorophenyl)propane, and 2,2-bis(4-hydroxy-3,5-dibromophenyl)propane; bis(hydroxyaryl) cycloalkanes such as 1,1-bis(4-hydroxyphenyl)cyclopentane, 1,1-bis(4-hydroxyphenyl)cyclohexane, 1,1-bis(4-hydroxyphenyl) -3,5,5-trimethylcyclohexane, 2,2-bis(4-hydroxyphenyl)norbornane, and 1,1-bis(4-hydroxyphenyl)cyclododecane; dihydroxyaryl ethers such as 4,4'-dihydroxyphenyl ether and 4,4'-dihydroxy-3,3'-dimethylphenyl ether; dihydroxydiaryl sulfides such as 4,4'-dihydroxydiphenyl sulfide and 4,4'-dihydroxy-3,3'-dimethyldiphenyl sulfide; dihydroxydiaryl sulfoxides such as 4,4'-dihydroxydiphenyl sulfoxide and 4,4'-dihydroxy-3,3'-dimethyldiphenyl sulfoxide; dihydroxydiaryl sulfones such as 4,4'-dihydroxydiphenyl sulfone and 4,4'-dihydroxy-3,3'-dimethyldiphenyl sulfone; dihydroxydiphenyls such as 4,4'-dihydroxydiphenyl; dihydroxydiarylfluorenes such as 9,9-bis(4-hydroxyphenyl)fluorene and 9,9-bis(4-hydroxy-3-methylphenyl) fluorene; dihydroxydiaryladamantanes such as 1,3-bis(4-hydroxyphenyl)adamantane, 2,2-bis(4-hydroxyphenyl)adamantane, and 1,3-bis(4-hydroxyphenyl)-5,7-dimethyladamantane; 4,4'-[1,3-phenylenebis(1-methylethylidene)]bisphenol; 10,10-bis(4-hydroxyphenyl)-9-anthrone; and 1,5-bis(4-hydroxyphenylthio)-2,3-dioxapentaene. Those dihydric phenols may each be used alone or as a mixture of two or more.

In the production of the aromatic polycarbonate as the component (A-2), the molecular weight modifier, the chain-end terminator, or the like may be used as required. Any of various agents generally used in the polymerization of a polycarbonate resin may be used.

Specific examples of the molecular weight modifier include monohydric phenols such as phenol, o-n-butylphenol, m-n-butylphenol, p-n-butylphenol, o-isobutylphenol, m-isobutylphenol, p-isobutylphenol, o-t-butylphenol, m-t-butylphenol, p-t-butylphenol, o-n-pentylphenol, m-n-pentylphenol, p-n-pentylphenol, o-n-hexylphenol, m-n-hexylphenol, p-n-hexylphenol, p-t-octylphenol, o-cyclohexylphenol, m-cyclohexylphenol, p-cyclohexylphenol, o-phenylphenol, m-phenylphenol, p-phenylphenol, o-nonylphenol, m-nonylphenol, p-nonylphenol, o-cumylphenol, m-cumylphenol, p-cumylphenol, o-naphthylphenol, m-naphthylphenol, p-naphthylphenol, 2,5-di-t-butylphenol, 2,4-di-t-butylphenol, 3,5-di-t-butylphenol, 2,5-dicumylphenol, 3,5-dicumylphenol, p-cresol, p-bromophenol, 2,4, 6-tribromophenol, a monoalkylphenol having a linear or branched alkyl group having an average number of carbon atoms of 12 to 35 at the ortho-, meta- or para-position, 9-(4-hydroxyphenyl)-9-(4-methoxyphenyl)fluorene, 9-(4-hydroxy-3-methylphenyl)-9-(4-methoxy-3-methylphenyl)fluorene, and 4-(1-adamantyl)phenol.

Of those monohydric phenols, p-t-butylphenol, p-cumylphenol, p-phenylphenol, and the like are preferred. In addition, those compounds may be used alone, or two or more thereof may be used in combination.

As the chain-end terminator, a monocarboxylic acid and a derivative thereof and a monohydric phenol may be used. Examples thereof include p-tert-butyl-phenol, p-phenylphenol, p-cumylphenol, p-perfluorononylphenol, p-(perfluorononylphenyl) phenol, p-(perfluorohexylphenyl)phenol, p-tert-perfluorobutylphenol, 1-(p-hydroxybenzyl)perfluorodecane, p-[2-(1H,1H-perfluorotridodecyloxy)-1,1,1,3,3,3-hexafluoropropyl]phenol, 3,5-bis(perfluorohexyloxycarbonyl) phenol, perfluorododecyl p-hydroxybenzoate, p-(1H,1H-perfluorooctyloxy)phenol, 2H,2H,9H-perfluorononanoic acid, and 1,1,1,3,3,3-hexafluoro-2-propanol.

Further, a branching agent can be used to turn the dihydric phenol-based compound into a branched polycarbonate. The addition amount of the branching agent is preferably 0.01 to 3 mol%, more preferably 0.1 to 1.0 mol% with respect to the dihydric phenol-based compound.

Examples of the branching agent include compounds each having three or more functional groups such as 1,1,1-tris(4-hydroxyphenyl)ethane, 4,4'-[1-[4-[1-(4-hydroxyphenyl)-1-methylethyl]phenyl]ethylidene]bisphenol, α,α',α"-tris(4-hydroxyphenyl)-1,3,5-triisopropylbenzene, 1-[α-methyl-α-(4'-hydroxyphenyl)ethyl]-4-[α',α'-bis(4"-hydroxyphenyl)ethyl] benzene, phloroglucin, trimellitic acid, and isatinbis(o-cresol).

The content of the component (A-1) in (A) the polycarbonate-based resin composed of the component (A-1) and the component (A-2) is 5 to 100 mass%, preferably 70 to 100 mass%, more preferably 50 to 100 mass%. The content of the component (A-2) is 95 to 0 mass%, preferably 30 to 0 mass%, more preferably 50 to 0 mass%.

When the content of the component (A-1) is 5 mass% or more or the content of the component (A-2) is 95 mass% or less, the content of a polyorganosiloxane block moiety including the structural unit represented by the general formula (II) need not be increased at the time of the production of the component (A-1) for increasing the content of the polyorganosiloxane block moiety in (A) the polycarbonate-based resin to improve the low-temperature impact strength. Therefore, at the time of the production of the component (A-1), the uniformity of the reaction in the polymerizing step does not reduce, and the separability of a polymer and washing water in the step of washing the polymer does not deteriorate, and hence the productivity of the component (A-1) improves.

The content of the polyorganosiloxane block moiety having the structural unit represented by the general formula (II) is preferably 2 to 10 mass%, more preferably 3 to 7 mass%, still more preferably 3 to 5 mass% in (A) the polycarbonate-based resin composed of the component (A-1) and the component (A-2). When the content is 2 mass% or more, the improving effect on the impact strength is sufficient. Meanwhile, when the content is 10 mass% or less, the composition has sufficient heat resistance.

[(B) Phosphorus-based antioxidant]

The polycarbonate resin composition for a battery pack of the present invention is required to contain a phosphorus-based antioxidant as a component (B).

The phosphorus-based antioxidant to be used in the present invention is not particularly limited. Typical examples thereof include tris(nonylphenyl) phosphite and 2-ethylhexyl diphenyl phosphite; trialkyl phosphites such as trimethyl phosphite, triethyl phosphite, tributyl phosphite, trioctyl phosphite, trinonyl phosphite, tridecyl phosphite, trioctadecyl phosphite, distearyl pentaerythrityl diphosphite, tris(2-chloroethyl) phosphite, and tris(2,3-dichloropropyl) phosphite; tricycloalkyl phosphites such as tricyclohexyl phosphite; triaryl phosphites such as triphenyl phosphite, tricresyl phosphite, tris(ethylphenyl) phosphite, tris(butylphenyl) phosphite, tris(hydroxyphenyl) phosphite, and tris(2,4-di-tert-butylphenyl) phosphite; trialkyl phosphates such as trimethyl phosphate, triethyl phosphate, tributyl phosphate, trioctyl phosphate, tridecyl phosphate, trioctadecyl phosphate, distearyl pentaerythrityl diphosphate, tris(2-chloroethyl) phosphate, and tris(2,3-dichloropropyl)phosphate; tricycloalkyl phosphates such as tricyclohexyl phosphate; and triaryl phosphates such as triphenyl phosphate, tricresyl phosphate, tris(nonylphenyl) phosphate, and 2-ethylphenyl diphenyl phosphate. Of those, triaryl phosphite and triaryl phosphate are suitably used.

In the present invention, one kind of those phosphorus-based antioxidants may be used alone, or two or more thereof may be used in combination. In addition, the content of the phosphorus-based antioxidant in the polycarbonate

resin composition for a battery pack needs to be 0.01 to 1 parts by mass, preferably 0.02 to 0.3 parts by mass, more preferably 0.04 to 0.2 parts by mass with respect to 100 parts by mass of (A) the polycarbonate-based resin. Incorporating the phosphorus-based antioxidant at a content in the range provides a sufficient antioxidant effect.

[(C) Alkali metal salt and/or alkaline earth metal salt of organosulfonic acid]

The polycarbonate resin composition for a battery pack of the present invention preferably comprises an alkali metal salt and/or alkaline earth metal salt of an organosulfonic acid (hereinafter sometimes referred to as "organosulfonic acid alkali or alkaline-earth metal salt") as a component (C) for improving its flame retardancy.

Examples of the organosulfonic acid include a perfluoroalkanesulfonic acid and a polystyrenesulfonic acid.

The organosulfonic acid alkali or alkaline-earth metal salt is an alkali metal salt or alkaline earth metal salt of an organosulfonic acid having at least one carbon atom, though examples thereof include various salts.

Examples of the alkali metal include sodium, potassium, lithium, and cesium, and examples of the alkaline earthmetal include magnesium, calcium, strontium, and barium. Of those, a sodium, potassium, or cesium salt is preferred.

As the component (C), an alkali metal salt and/or an alkaline earth metal salt of a perfluoroalkanesulfonic acid or a polystyrenesulfonic acid are preferred.

As the alkali and/or alkaline-earth metal salts of a perfluoroalkanesulfonic acid, there are given salts represented by the following general formula (12).

$$(C_dF_{2d+1}SO_3)_eM\cdots \qquad (12)$$

In the formula (12), d represents an integer of 1 to 10, M represents an alkali metal such as lithium, sodium, potassium, or cesium, or an alkaline earth metal such as magnesium, calcium, strontium, or barium, and e represents the valence of M.)

For example, salts described in JP 47-40445 B correspond to these metal salts.

Examples of the perfluoroalkanesulfonic acid in the general formula (12) may include perfluoromethanesulfonic acid, perfluoroethanesulfonic acid, perfluoropropanesulfonic acid, perfluorobutanesulfonic acid, perfluoromethylbutanesulfonic acid, perfluorohexanesulfonic acid, perfluoroheptanesulfonic acid, and perfluorooctanesulfonic acid. A potassium salt thereof is particularly preferably used.

Other examples of the an alkali metal salt and/or alkaline earth metal salt of an organosulfonic acid include: alkali or alkaline-earth metal salt of an alkyl sulfonic acid, benzenesulfonic acid, an alkylbenzenesulfonic acid, diphenylsulfonic acid, naphthalenesulfonic acid, 2,5-dichlorobenzenesulfonic acid, 2,4,5-trichlorobenzene sulfonic acid, diphenyl sulfone-3-sulfonic acid, diphenyl sulfone-3,3'-disulfonic acid, and naphthalenetrisulfonic acid, and a fluorine substitute thereof, and polystyrene sulfonic acid. Of those, as the organosulfonic acid, a perfluoroalkanesulfonic acid and diphenylsulfonic acid are particularly preferred.

The alkali and/or alkaline-earth metal salt of the polystyrene sulfonic acid are, for example, an alkali and/or alkaline-earth metal salt of a sulfonate group-containing aromatic vinyl-based resin represented by the following general formula (13).

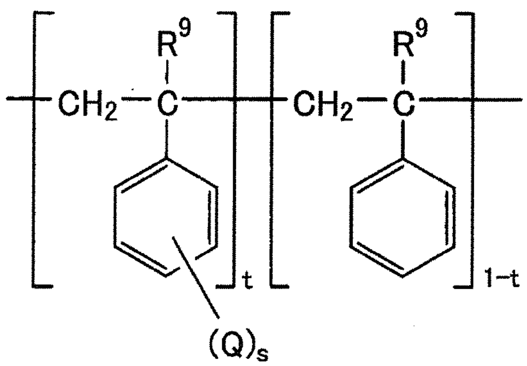

(13)

In the formula (13), Q represents a sulfonate group, $R^9$ represents a hydrogen atom or a hydrocarbon group having 1 to 10 carbon atoms, s represents an integer of 1 to 5, and t represents a molar fraction and falls within the range of $0<t\leq1$.

In this case, the sulfonate group Q is an alkali metal salt and/or alkaline earth metal salt of a sulfonic acid, and examples of the metals include sodium, potassium, lithium, rubidium, cesium, beryllium, magnesium, calcium, strontium, and barium.

In addition, $R^9$ represents a hydrogen atom or a hydrocarbon group having 1 to 10 carbon atoms, preferably a hydrogen atom or a methyl group.

s represents an integer of 1 to 5 and t satisfies a relationship of $0<t\leq 1$. Therefore, an aromatic ring may be totally substituted or partially substituted with the sulfonate group (Q).

The content of (C) the alkali and/or alkaline-earthmetal salts of the organosulfonic acid are preferably 0.01 to 0.15 parts by mass, more preferably 0.02 to 0.13 parts by mass, still more preferably 0.03 to 0.12 parts by mass with respect to 100 parts by mass of the resin mixture (A). When the content is 0.01 parts by mass or more and 0.15 parts by mass or less, the flame retardancy can be sufficiently improved.

[(D) Mixed powder]

The polycarbonate resin composition for a battery pack of the present invention preferably further comprises a mixed powder composed of polytetrafluoroethylene particles and organic polymer particles as a component (D).

<Polytetrafluoroethylene particles>

The polytetrafluoroethylene particles in the mixed powder each have a particle diameter of typically 10 μm or less, preferably 0.05 to 1.0 μm.

The polytetrafluoroethylene particles are prepared as such an aqueous dispersion that the particles are dispersed in water containing, for example, an emulsifier. The aqueous dispersion of the polytetrafluoroethylene particles is obtained by subjecting a tetrafluoroethylene monomer to emulsion polymerization with a fluorine-containing surfactant.

Fluorine-containing olefins such as hexafluoropropylene, chlorotrifluoroethylene, a fluoroalkylethylene, and a perfluoroalkyl vinyl ether, and fluorine-containing alkyl (meth) acrylates such as a perfluoroalkyl (meth) acrylate can be used as a copolymerizable component upon emulsion polymerization of the polytetrafluoroethylene particles as long as the characteristics of the polytetrafluoroethylene are not impaired.

The content of the copolymerizable component is preferably 10 mass% or less with respect to tetrafluoroethylene in the polytetrafluoroethylene particles.

<Organic polymer particles>

The organic polymer particles in the mixed powder, which are not particularly limited, each preferably have an affinity for a polycarbonate resin from the viewpoint of the dispersibility of the polytetrafluoroethylene particles upon blending into (A) the polycarbonate-based resin.

A monomer for producing the organic polymer particles may be specifically exemplified by:styrene-based monomerssuch asstyrene, p-methylstyrene, o-methylstyrene, p-chlorostyrene, o-chlorostyrene, p-methoxystyrene, o-methoxystyrene, 2,4-dimethylstyrene, and α-methylstyrene; alkyl(meth)acrylate-based monomers such as methyl acrylate, methyl methacrylate, ethyl acrylate, ethyl methacrylate, butyl acrylate, butyl methacrylate, 2-ethylhexyl acrylate, 2-ethylhexyl methacrylate, dodecyl acrylate, dodecyl methacrylate, tridecyl acrylate, tridecyl methacrylate, octadecyl acrylate, octadecyl methacrylate, cyclohexyl acrylate, and cyclohexyl methacrylate; vinyl cyanide-based monomers such as acrylonitrile and methacrylonitrile; vinyl ether-based monomers such as vinyl methyl ether and vinyl ethyl ether; vinyl carboxylate-based monomers such as vinyl acetate and vinyl butyrate; olef in-based monomers such as ethylene, propylene, and isobutylene; and diene-based monomers such as butadiene, isoprene, and dimethylbutadiene. In particular, an alkyl (meth)acrylate-based monomer is preferably used. It should be noted that the term "alkyl (meth) acrylate-based monomer" refers to both alkyl acrylate-based and alkyl methacrylate-based monomers.

The organic polymer particles are obtained by polymerizing any such monomer. One kind of the monomers can be used, or two or more kinds thereof can be used as a mixture. The organic polymer particles are preferably particles composed of an alkyl (meth)acrylate-based copolymer.

The organic polymer particles are prepared as, for example, an aqueous dispersion of the organic polymer particles. Although a method of producing the aqueous dispersion of the organic polymer particles is not particularly limited, an emulsion polymerization method involving using an ionic emulsifier and a soap-free emulsion polymerization method involving using an ionic polymerization initiator can be given as examples thereof.

Any one of an anionic emulsifier, a cationic emulsifier, and an amphoteric ionic emulsifier can be used as the ionic emulsifier. In addition, a nonionic emulsifier can be used in combination with any such ionic emulsifier.

Fatty acid salts, higher alcohol sulfates, liquid fatty oil sulfates, sulfates of aliphatic amines and aliphatic amides, aliphatic alcohol phosphates, sulfonates of dibasic fatty acid esters, fatty acid amide sulfonates, alkyl allyl sulfonates, and naphthalene sulfonates of formalin condensates can be given as examples of the anionic emulsifier.

Aliphatic amine salts, quaternary ammonium salts, and alkyl pyridinium salts can be given as examples of the cationic emulsifier.

An alkyl betaine can be given as an example of the amphoteric emulsifier.

Examples of the ionic polymerization initiator may include: anionic polymerization initiators such as persulfates (e.g., potassium persulfate and ammonium persulfate), azobis(isobutyronitrile), and 4,4'-azobis(4-cyanovaleric acid); and cationic polymerization initiators such as 2,2'-azobis(amidinopropane) dihydrochloride, 2,2'-azobis[2-(5-methyl-2-imidazolin-2-yl)propane] dihydrochloride, 2,2'-azobis[2-(2-imidazolin-2-yl)propane] dihydrochloride, and 2,2'-azobisisobutyramide dihydrate.

A particle diameter d of each of the organic polymer particles in the present invention, which is not particularly limited, preferably falls within a range represented by the following formula with respect to a particle diameter D of each of the polytetrafluoroethylene particles from the viewpoint of the stability of an agglomerated state with the polytetrafluoroethylene particles.

$$0.1D<d<10D$$

<Preparation of mixed powder>

The mixed powder composed of the polytetrafluoroethylene particles and the organic polymer particles as the component (D) is obtained by, for example, mixing the aqueous dispersion of the polytetrafluoroethylene particles and the aqueous dispersion of the organic polymer particles, and then turning the mixture into a powder by a method to be described later. The mixed powder contains agglomerated particles as a result of the agglomeration of the polytetrafluoroethylene particles and the organic polymer particles caused by their difference in surface charge, and the respective individual particles remaining without undergoing the agglomeration.

Although the agglomerated particles each have such a structure that a polytetrafluoroethylene particle and an organic polymer particle are integrated with each other, various morphologies are available for the agglomerated particles depending on a mixing ratio between both the particles and their particle diameters. That is, for example, such a morphology that a polytetrafluoroethylene particle is surrounded with organic polymer particles, such a morphology that an organic polymer particle is surrounded with polytetrafluoroethylene particles in contrast to the foregoing, and such a morphology that several particles agglomerate with one particle exist.

In order that an agglomeration rate upon mixing of the aqueous dispersions may be reduced, a nonionic emulsifier can be caused to adsorb onto the surface of the polytetrafluoroethylene particles and/or the organic polymer particles before the mixing.

The nonionic emulsifier is not particularly limited, and a polyoxyethylene alkyl ether, a polyoxyethylene alkyl allyl ether, a dialkylphenoxypoly(ethyleneoxy)ethanol, a polyvinyl alcohol, a polyacrylic acid, and an alkyl cellulose can be given as examples thereof.

Then, the aqueous dispersions mixed as described above can be turned into a powder by charging the mixture into hot water in which a metal salt such as calcium chloride or magnesium sulfate has been dissolved, and subjecting the resultant to salting out and coagulation, followed by drying or spray drying.

Alternatively, the mixed aqueous dispersion can be turned into a powder by subjecting a monomer having an ethylenically unsaturated bond in the mixed aqueous dispersion to emulsion polymerization, followed by coagulation or spray drying.

The ethylenically unsaturated monomer to be subjected to emulsion polymerization in the mixed aqueous dispersion may be exemplified by: styrene-based monomers such as styrene, p-methylstyrene, o-methylstyrene, p-chlorostyrene, o-chlorostyrene, p-methoxystyrene, o-methoxystyrene, 2,4-dimethylstyrene, and α-methylstyrene; alkyl (meth)acrylate-based monomers such as methyl acrylate, methyl methacrylate, ethyl acrylate, ethyl methacrylate, butyl acrylate, butyl methacrylate, 2-ethylhexyl acrylate, 2-ethylhexyl methacrylate, dodecyl acrylate, dodecyl methacrylate, cyclohexyl acrylate, and cyclohexyl methacrylate; vinyl cyanide-based monomers such as acrylonitrile and methacrylonitrile; vinyl ether-based monomers such as vinyl methyl ether and vinyl ethyl ether; vinyl carboxylate-based monomers such as vinyl acetate and vinyl butyrate; olefin monomers such as ethylene, propylene, and isobutylene; and diene-based monomers such as butadiene, isoprene, prene, and dimethylbutadiene. One of those monomers can be used, or two or more thereof can be used as a mixture.

The content of the polytetrafluoroethylene particles in the mixed powder is typically 0.1 to 90 mass%, preferably 30 to 90 mass%, more preferably 40 to 90 mass% from the viewpoints of, for example, flame retardancy based on the anti-dripping effect of the resin composition to be obtained, and the external appearance and weld strength of a molded article thereof.

The content of (D) the mixed powder composed of the polytetrafluoroethylene particles and the organic polymer particles in the polycarbonate resin composition for a battery pack of the present invention is typically 0.1 to 1 parts by mass, preferably 0.1 to 0.9 parts by mass, more preferably 0.2 to 0.8 parts by mass with respect to 100 parts by mass

of (A) the plycarbonate-based resin.

When the content of the mixed powder is 0.1 parts by mass or more, the anti-dripping performance improves and hence the flame retardancy can be achieved. On the other hand, when the content is 1 parts by mass or less, the ratio of the organic polymer in the composition does not excessively increase and hence the flame retardancy can be achieved.

[Component to be arbitrarily added]

The polycarbonate resin composition for a battery pack of the present invention can contain any one of the various known addition components conventionally added to a polycarbonate resin composition in addition to the components (A) to (D) as required to such an extent that an effect of the present invention is not impaired. Examples of such addition components include a reinforcing material, a filler, a hindered amine-based light stabilizer, an antioxidant except the phosphorus-based antioxidant, a UV absorber, an antistatic agent, a lubricant, a release agent, a dye, a pigment, and any other flame retardant or any other elastomer for an impact resistance improvement.

The content of any such other addition component is typically 0 to 1 parts by mass, preferably 0.01 to 0.5 parts by mass with respect to 100 parts by mass of (A) the polycarbonate-based resin.

The polycarbonate-based resin composition for a battery pack of the present invention is substantially free of an organohalogen-based flame retardant and an organophosphate-based flame retardant. Accordingly, the composition is free of the possibilities of the generation of a harmful gas, the contamination of a molding machine, resin burning, and a reduction in its heat resistance.

[Method of preparing polycarbonate resin composition for battery pack]

The polycarbonate resin composition for a battery pack of the present invention can be prepared by: blending the component (A) ((A-1) and (A-2)), the component (B), and as necessary, the component (C) and/or component (D), and any one of the various arbitrary components at a predetermined ratio; and kneading the components.

The blending and kneading in this case can be performed by a method involving pre-mixing the components with a generally used device such as a ribbon blender or a drum tumbler and using a Henschel mixer, a Banbury mixer, a single-screw extruder, a twin-screw extruder, a multi-screw extruder, a co-kneader, or the like.

A heating temperature during the kneading is appropriately selected from the range of 240 to 300°C in ordinary cases.

It should be noted that a component to be incorporated except the polycarbonate-based resin can be melted and kneaded with the polycarbonate-based resin, that is, can be added as a master batch in advance.

Various kinds of the molded article can be produced by using the polycarbonate resin composition of the present invention with the melt-kneading molding machine or a pellet obtained from the composition as a raw material by an injection molding method, an injection compression molding method, an extrusion molding method, a blow molding method, a press molding method, a vacuum molding method, a foam molding method, and the like.

In particular, a pellet-like molding raw material can be produced by the melt-kneading method and then the pellet can be suitably used in the production of an injection-molded article by injection molding or injection compression molding.

It should be noted that a gas injection molding method for preventing a sink mark in the external appearance of the molded article or for reducing its weight can be adopted as the injection molding method.

Next, a battery pack of the present invention is described.

[Battery pack]

The battery pack of the present invention is characterized by being formed by using the polycarbonate resin composition. The battery pack including an upper case and a lower case is particularly suitable.

In recent years, equipments having built therein batteries as power sources such as a mobile phone, a notebook personal computer, and a portable player for replaying a compact disc (CD) or mini disc (MD) have been used in many fields. In recent years, the multi-functionalization and size reduction of any such equipment have progressed, and the number of equipments each having higher portability has been increasing. Accordingly, a demand for a battery pack has been growing in association with an increase in frequency at which any such equipment is used. In addition, in association with the size reduction of any such equipment, a thinner and smaller battery pack conforming to its main body has been required.

A battery pack to be used in any such equipment is constituted by locating a battery, a protection circuit substrate, and the like between an upper case and lower case made of plastic.

A method involving bonding the upper case and the lower case through ultrasonic welding is generally employed

in such battery pack. At the time of the ultrasonic welding, however, burrs are produced, though their amount is small. The burr potion is responsible for the occurrence of a notch. Accordingly, the battery pack cases having the burrs produced by the heat forming or ultrasonic welding of the cases are liable to undergo destruction starting from the produced notch portion as a starting point.

In view of the foregoing, a material that can resist impact under a low-temperature environment even in the presence of a notch, and has flame retardancy and heat resistance which a product is required to have has been required as a battery pack material.

Therefore, the polycarbonate resin composition for a battery pack of the present invention excellent in drop impact strength under a low-temperature environment, flame retardancy, and heat resistance is used in the formation of the upper case and lower case of the battery pack.

A nickel-cadmium (Ni-Cd) battery, a nickel hydrogen (Ni-MH) battery, a lithium ion (Li-ion) battery, or the like has heretofore been used as the battery to be located in the battery pack. In recent years, however, a polymer lithium secondary battery using a polymer as an electrolyte has been frequently used for the purpose of preventing a battery liquid leak. Further, the use of the polymer as an electrolyte has, for example, the following merits: a thin shape can be obtained and the degree of freedom in shape is high.

Examples

Hereinafter, the present invention is described in more detail by way of examples and comparative examples. However, the present invention is by no means limited by these examples.

It should be noted that characteristic values in the respective examples were determined in accordance with the following procedures.

<Viscosity number of PC-PDMS copolymer (A-1)>

A measurement was performed in conformity with ISO 1628-4 (1999).

<Viscosity-average molecular weights of PC-PDMS copolymer (A-1) and aromatic polycarbonate (A-2)>

Those viscosity-average molecular weights (Mv) are each calculated from the following equation by measuring the viscosity of a methylene chloride solution at 20°C with an Ubbelohde-type viscometer and determining a limiting viscosity [η] from the measured viscosity.

$$[\eta]=1.23\times10^{-5}Mv^{0.83}$$

<Performance evaluation I of polycarbonate resin composition (hereinafter sometimes abbreviated as "PC composition")>

A PC composition obtained in each example was pelletized with a vented uniaxial extruder of 40 mmφ at a resin temperature of 280°C to provide a pellet. It should be noted that the resin temperature was set to 300°C only in Comparative Example 2.

The resultant pellet was dried at 120°C for 8 hours. After that, the dried product was subjected to injection molding with an injection molding machine at a molding temperature of 280°C and a die temperature of 80°C to provide a test piece. The following measurements were performed with the pellet or the test piece obtained by the injection molding.

(1) Q value (flow value) (unit; $10^{-2}$ mL/sec)

The amount (mL/sec) of a molten resin flowing out of a nozzle having a diameter of 1 mm and a length of 10 mm was measured with an elevated flow tester in conformity with JIS K 7210 at 280°C under a pressure of 15.7 MPa.

The Q value represents the amount of the resin that flows out per unit time and a higher Q value means that its flowability is better.

(2) Heat distortion temperature (HDT)

A measurement was performed in conformity with ASTM D648 at a load of 0.45 MPa.

The HDT represents an index of heat resistance.

<Performance evaluation II of injection-molded article of PC composition>

A PC composition pellet obtained in each example was subjected to injection molding under the following conditions to provide a battery pack model molded article (50 mm×88 mm, depth: 4.5 mm, thickness: 1.2 mm) illustrated in the dimension diagram of FIG. 1. It should be noted that no molded article could be obtained in Comparative Example 2 because of the following reason: injection molding was attempted, but the viscosity was high at a cylinder temperature of 300 to 320°C and hence filling became impossible.

Further, the cylinder temperature was increased to 380°C. As a result, coloring due to the deterioration of the resin composition started to appear and hence the molding was stopped.

(Molding conditions)

Injection molding machine: electric injection molding machine "ES-1000" (80 t) manufactured by NISSEI PLASTIC INDUSTRIAL CO., LTD.
Molding machine cylinder temperature: 300 to 320°C
Molding cycle: 30 sec/cycle
Die temperature: 130°C

(1) Flame retardancy evaluation

The battery packmodel molded article obtained in the foregoing was subjected to a combustion test in conformity with UL746C by setting the molded article and a burner as illustrated in FIG. 3. A test flame was brought into contact with the molded article for 30 seconds twice at an interval of 1 minute. After that, a combustion time after each flame contact was measured. An evaluation was performed three times (n=3), and A, B, and X represent the following combustion times.

A: The flame quenches within 30 seconds in each of all the three evaluations.
B: The flame quenches within 60 seconds in each of all the three evaluations.
X: It takes 61 seconds or more for the flame in any one of the three evaluations to quench.

(2) Drop impact resistance evaluation

The pellets obtained in the respective examples were subjected to injection molding under the following conditions to provide molded articles (100 mmx20 mm, thickness: 4.0 mm) having such two kinds of notch radii as illustrated in the dimension diagram of FIG. 2, i.e., R=0 and R=0.2.

(Molding conditions)

Injection molding machine: electric injection molding machine "MD-350W" (350 t) manufactured by NIIGATA MACHINE TECHNO CO., LTD.
Molding machine cylinder temperature: 280 to 300°C
Molding cycle: 50 sec/cycle
Die temperature: 90°C

The resultant molded articles were each placed in a thermostat bath and cooled to a predetermined temperature (23°C or 0°C). The Charpy impact strength of the cooled product was measured in conformity with ISO 176.

Production Example 1 Production of PC-PDMS copolymer (Si-PC-1)

(1) Synthesis of polycarbonate oligomer

Added to a 5.6-mass% aqueous sodium hydroxide were 2,000 ppm by mass of sodium dithionite with respect to bisphenol A (BPA) to be dissolved later. BPA was dissolved in the resultant so that its concentration became 13.5 mass%. Thus, a solution of BPA in aqueous sodium hydroxide was prepared.

The solution of BPA in aqueous sodium hydroxide, methylene chloride, and phosgene were continuously passed through a tubular reactor having an inner diameter of 6 mm and a tube length of 30 m at flow rates of 40 L/hr, 15 L/hr, and 4.0 kg/hr, respectively.

The tubular reactor had a jacket portion and the temperature of a reaction liquid was kept at 40°C or less by passing cooling water through the jacket.

The reaction liquid that had exited the tubular reactor was continuously introduced into a baffled vessel-type reactor having an internal volume of 40 L provided with a sweptback blade, and then 2.8 L/hr of the solution of BPA in aqueous sodium hydroxide, 0.07 L/hr of a 25-mass% aqueous sodium hydroxide, 17 L/hr of water, and 0.64 L/hr of a 1-mass% aqueous solution of triethylamine were further added to the reactor to perform a reaction.

The reaction liquid flowing out of the vessel-type reactor was continuously extracted, and then an aqueous phase was separated by leaving the liquid at rest and removed, followed by the collection of a methylene chloride phase.

The concentration of the polycarbonate oligomer thus obtained was 329 g/L and the concentration of a chloroformate group was 0.74 mol/L.

(2) Synthesis of PC-PDMS copolymer (Si-PC-1)

15 Liters of the polycarbonate oligomer solution synthesized in the section (1), 9.0 L of methylene chloride, 393 g of an allyl phenol terminal-modified polydimethylsiloxane (PDMS) in which the repeating number of dimethylsiloxane units was 90, and 8.8 mL of triethylamine were loaded into a 50-L vessel-type reactor provided with a baffle board, a paddle-type stirring blade, and a cooling jacket. While the mixture was stirred, 1, 389 g of a 6. 4-mass% aqueous sodium hydroxide were added to the mixture to perform a reaction between the polycarbonate oligomer and the allyl phenol terminal-modified PDMS for 10 minutes.

To the polymerization liquid, a solution of p-t-butylphenol (PTBP) in methylene chloride (prepared by dissolving 140 g of PTBP in 2.0 L of methylene chloride) and a solution of BPA in aqueous sodium hydroxide (prepared by dissolving 1, 012 g of BPA in an aqueous solution prepared by dissolving 577 g of NaOH and 2.0 g of sodium dithionite in 8. 4 L of water) were added to perform a polymerization reaction for 50 minutes.

10 Liters of methylene chloride were added to the resultant to dilute the resultant, and then the mixture was stirred for 10 minutes. After that, the mixture was separated into an organic phase containing a polycarbonate-polydimethylsiloxane copolymer, and an aqueous phase containing excessive amounts of BPA and NaOH, and then the organic phase was isolated.

The solution of the polycarbonate-polydimethylsiloxane copolymer in methylene chloride thus obtained was sequentially washed with a 0.03-mol/L aqueous NaOH and 0.2-mol/L hydrochloric acid in amounts of 15 vol% each with respect to the solution. Next, the solution was repeatedly washed with pure water until an electric conductivity in an aqueous phase after the washing became 0.01 μS/m or less.

The solution of the polycarbonate-polydimethylsiloxane copolymer in methylene chloride obtained by the washing was concentrated and pulverized, and then the resultant flake was dried under reduced pressure at 120°C.

The resultant polycarbonate-polydimethylsiloxane copolymer had an amount of a PDMS residue (PDMS copolymerization amount) determined by nuclear magnetic resonance (NMR) of 6.0 mass%, a viscosity number measured in conformity with ISO 1628-4 (1999) of 46.9, and a viscosity-average molecular weight Mv of 17,400.

Production Example 2 Production of PC-PDMS copolymer (Si-PC-2)

Production was performed in the same manner as in the "Si-PC-1" except that: 315 g of a eugenol terminal-modified polydimethylsiloxane (PDMS) in which the repeating number of dimethylsiloxane units was 90 were used instead of 393 g of the allyl phenol terminal-modified polydimethylsiloxane (PDMS) in which the repeating number of dimethylsiloxane units was 90; and the amount of PTBP was changed to 129 g. The resultant copolymer had an amount of a PDMS residue (PDMS copolymerization amount) of 4.8 mass%, a viscosity number of 49.5, and a viscosity-average molecular weight Mv of 18,600.

Production Example 3 Production of PC-PDMS copolymer (Si-PC-3)

Production was performed in the same manner as in the "Si-PC-1" except that: 197 g of an allyl phenol terminal-modified polydimethylsiloxane (PDMS) in which the repeating number of dimethylsiloxane units was 153 were used instead of 393 g of the allyl phenol terminal-modified polydimethylsiloxane (PDMS) in which the repeating number of dimethylsiloxane units was 90; and the amount of PTBP was changed to 129 g. The resultant copolymer had an amount of a PDMS residue (PDMS copolymerization amount) of 2.8 mass%, a viscosity number of 49.9, and a viscosity-average molecular weight Mv of 18,800.

Production Example 4 Production of PC-PDMS copolymer (Si-PC-4)

Production was performed in the same manner as in the "Si-PC-3" except that 183 g of an allyl phenol terminal-modified polydimethylsiloxane (PDMS) in which the repeating number of dimethylsiloxane units was 300 were used instead of 197 g of the allyl phenol terminal-modified polydimethylsiloxane (PDMS) in which the repeating number of dimethylsiloxane units was 153. The resultant copolymer had an amount of a PDMS residue (PDMS copolymerization amount) of 2. 6 mass%, a viscosity number of 49.9, and a viscosity-average molecular weight Mv of 18,800.

Production Example 5 Production of PC-PDMS copolymer (Si-PC-5)

Production was performed in the same manner as in the "Si-PC-1" except that 393 g of an allyl phenol terminal-modified polydimethylsiloxane (PDMS) in which the repeating number of dimethylsiloxane units was 38 were used instead of 393 g of the allyl phenol terminal-modified polydimethylsiloxane (PDMS) in which the repeating number of dimethylsiloxane units was 90. The resultant copolymer had an amount of a PDMS residue (PDMS copolymerization amount) of 6.0 mass%, a viscosity number of 48.0, and a viscosity-average molecular weight Mv of 17,900.

Examples 1 to 9, and Comparative Examples 1 and 2

(A-1) The polycarbonate-polydimethylsiloxane copolymers (PC-PDMS copolymers) produced in Production Examples 1 to 5

(A-2) A TARFLON FN1900A (trade name, manufactured by Idemitsu Kosan Co. , Ltd., a BPA polycarbonate having p-t-butylphenol as a terminal group, viscosity number=51.1, viscosity-average molecular weight Mv=19, 300), a TARFLON FN2200A (trade name, manufactured by Idemitsu Kosan Co., Ltd., a BPA polycarbonate having p-t-butylphenol as a terminal group, viscosity number=55. 6, viscosity-average molecular weight Mv=21,300), a TARFLON FN2500A (trade name, manufactured by Idemitsu Kosan Co., Ltd., a BPA polycarbonate having p-t-butylphenol as a terminal group, viscosity number=62.2, viscosity-average molecular weight Mv=24,200), and a TARFLON FN2600A (trade name, manufactured by Idemitsu Kosan Co., Ltd., a BPA polycarbonate having p-t-butylphenol as a terminal group, viscosity number=64.9, viscosity-average molecular weight Mv=25,400)

(B) Tris(2,4-di-t-butylphenyl) phosphite, IRGAFOS 168 (trade name, manufactured by Ciba Specialty Chemicals)

(C) Potassium perfluorobutane sulfonate, EFTOP KFBS (trade name, manufactured by Mitsubishi Materials Electronic Chemicals Co.,Ltd.)

(D) Acrylic resin-modified polytetrafluoroethylene, Metablen A-3800 (trade name, manufactured by MITSUBISHI RAYON CO., LTD.)

Materials whose amounts were represented in units of "parts by mass" in Table 1 were blended and then the mixture was pelletized with a vented uniaxial extruder of 40 mmφ at a resin temperature of 280°C to provide a pellet.

The performance evaluation I of a PC composition and the performance evaluation II of an injection molded article of a PC composition were performed by using a PC composition pellet obtained in each example. Table 1 shows the results. It should be noted that a viscosity-average molecular weight in Table 1 represents the viscosity-average molecular weight of a polycarbonate-based resin used.

Table 1

| | | Unit | Example 1 | Example 2 | Example 3 | Example 4 | Example 5 | Example 6 | Example 7 | Example 9 | Comparative Example 1 | Comparative Example 2 | Remark |
|---|---|---|---|---|---|---|---|---|---|---|---|---|---|
| Resin blending composition | Si-PC-1 | Parts by mass | 100 | - | 63 | - | - | - | - | 80 | - | - | |
| | Si-PC-2 | | - | 100 | - | - | - | - | - | - | - | - | |
| | Si-PC-3 | | - | - | - | 100 | - | - | - | - | - | - | |
| | Si-PC-4 | | - | - | - | - | 100 | - | - | - | - | - | |
| | Si-PC-5 | | - | - | - | - | - | 100 | 80 | - | - | - | |
| | FN2600A | | - | - | 37 | - | - | - | - | - | - | - | |
| | FN2500A | | by - | - | - | - | - | - | - | - | - | 100 | |
| | FN2200A | | - | - | - | - | - | - | 20 | 20 | - | - | |
| | FN1900A | | - | - | - | - | - | - | - | - | 100 | - | |
| | Irgafos 168 | | 0.1 | 0.1 | 0.1 | 0.1 | 0.1 | 0.1 | 0.1 | 0.1 | 0.1 | 0.1 | Antioxidant |
| | A3800 | | - | - | - | - | - | - | - | 0.3 | - | - | PTFE |
| | KFBS | | - | - | - | - | - | - | - | 0.05 | - | - | Metal salt |
| PDMS | Content | Mass% | 6.0 | 4.8 | 3.8 | 2.8 | 2.6 | 6.0 | 4.8 | 4.8 | 0 | 0 | |
| | Chain length | n | 90 | 90 | 90 | 153 | 300 | 38 | 38 | 90 | - | - | |
| Viscosity-average molecular weight | | | 17400 | 18600 | 20500 | 18800 | 18800 | 17900 | 18600 | 18600 | 19300 | 24200 | |
| Flowability | Q value | $10^{-2}$mL/sec | 15 | 10 | 6.6 | 11 | 11 | 16 | 10 | 10 | 8.8 | 3.3 | |
| Heat resistance | HDT load 0.45MPa | °C | 138 | 138 | 139 | 141 | 141 | 134 | 135 | 139 | 144 | 145 | |
| Flame retardancy Undercover model | 1st | | B | B | B | B | B | A | A | A | A | - | |
| | 2nd | | A | A | A | A | A | A | A | A | X | - | |

(continued)

| | | Unit | Example 1 | Example 2 | Example 3 | Example 4 | Example 5 | Example 6 | Example 7 | Example 9 | Comparative Example 1 | Comparative Example 2 | Remark |
|---|---|---|---|---|---|---|---|---|---|---|---|---|---|
| Charpy R=0, 23°C | Normal-temperature drop model | $kJ/m^2$ | 103 | 107 | 123 | 114 | 117 | 105 | 104 | 107 | 112 | 130 | |
| Charpy R=0, 0°C | Low-temperature drop model | $kJ/m^2$ | 77 | 89 | 96 | 90 | 92 | 75 | 85 | 88 | 25 | 70 | |
| Charpy R=0.2, 0°C | Low-temperature drop model | $kJ/m^2$ | 94 | 115 | 118 | 104 | 108 | 106 | 109 | 114 | 111 | 125 | |

As can be seen from Table 1, the materials of Comparative Example 1 are not suitable for a battery pack in terms of a low-temperature drop strength because of their low impact strength under low temperatures at a notch radius R of 0. In addition, their flame retardancy is unstable. The materials of Comparative Example 2 are difficult to mold because of their poor flowability, though the materials can solve the problem of Comparative Example 1.

In contrast, each of the materials of Examples 1 to 9 has a higher impact strength under low temperatures at a notch radius R of 0 than those of Comparative Examples 1 and 2, and has good flame retardancy and good flowability.

Industrial Applicability

The polycarbonate resin composition for a battery pack of the present invention can provide a battery pack excellent in drop impact strength under a low-temperature environment, flame retardancy, and heat resistance with good moldability.

## Claims

1. A battery pack comprising an upper case and a lower case wherein the upper case and the lower case are bonded through ultrasonic welding of a polycarbonate resin composition, comprising:

   100 parts by mass of (A) a polycarbonate-based resin composed of 5 to 100 mass% of a polycarbonate-polyorganosiloxane copolymer (A-1) whose main chain is formed of a structural unit represented by the general formula (I) and a structural unit represented by the general formula (II), and that contains 2 to 10 mass% of a polyorganosiloxane block, and 0 to 95 mass% of an aromatic polycarbonate (A-2) except the copolymer (A-1):

   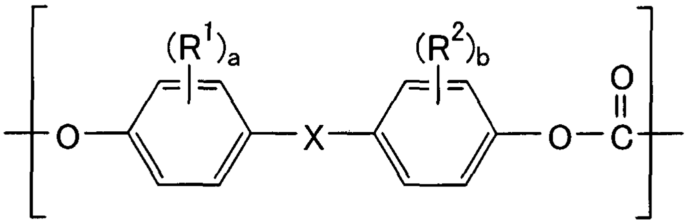

   (I)

   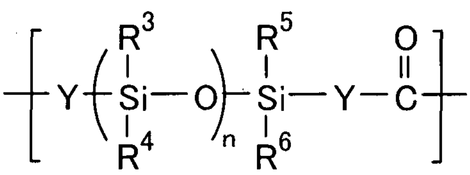

   (II)

   wherein the structural unit represented by the general formula (I) is a structural unit derived from bisphenol A, $R^3$ to $R^6$ each independently represent a hydrogen atom, a halogen atom, an alkyl group having 1 to 6 carbon atoms, an alkoxy group having 1 to 6 carbon atoms, or an aryl group having 6 to 12 carbon atoms, Y represents an organic residue from allyl phenol or eugenol,
   n represents an average repeating number and represents an integer of 20 to 600, and
   0.01 to 1 parts by mass of (B) a phosphorus-based antioxidant.

2. The battery pack according to claim 1, wherein both of $R^3$ and $R^4$ in the structural unit represented by the general formula (II) represent methyl groups.

3. The battery pack according to claim 1 or 2, wherein the polycarbonate composition further comprises 0.01 to 0.15 part by mass of (C) an alkali metal salt and/or alkaline earth metal salt of an organosulfonic acid, and/or 0.1 to 1 parts by mass of (D) a mixed powder composed of polytetrafluoroethylene particles and organic polymer particles.

4. Use of a polycarbonate resin composition as defined in any one of the claims 1 to 3 for a battery pack.

**Patentansprüche**

**1.** Batteriepack, enthaltend ein oberes Gehäuse und ein unteres Gehäuse, worin das obere und das untere Gehäuse durch Ultraschallschweißen einer Polycarbonatharz-Zusammensetzung gebunden sind, enthaltend:

100 Massenteile von (A) einem Harz auf Polycarbonatbasis, das sich aus 5 bis 100 Massen-% eines Polycarbonat-Polyorganosiloxan-Copolymers (A-1), dessen Hauptkette aus einer strukturellen Einheit mit der allgemeinen Formel (I) und einer strukturellen Einheit mit der allgemeinen Formel (II) gebildet ist, und das 2 bis 10 Massen-% eines Polyorganosiloxan-Blocks enthält, und 0 bis 95 Massen-% eines aromatischen Polycarbonates (A-2) mit Ausnahme des Copolymers (A-1) zusammensetzt:

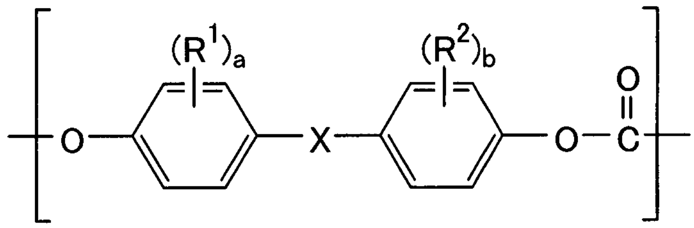

( I )

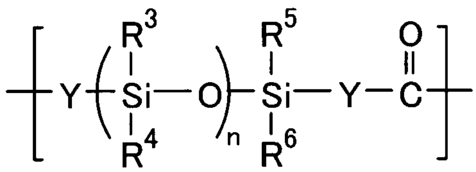

( II )

worin die strukturelle Einheit mit der allgemeinen Formel (I) eine strukturelle Einheit ist, die von Bisphenol A stammt, $R^3$ bis $R^6$ jeweils unabhängig ein Wasserstoffatom, Halogenatom, Alkylgruppe mit 1 bis 6 Kohlenstoffatomen, Alkoxygruppe mit 1 bis 6 Kohlenstoffatomen oder Arylgruppe mit 6 bis 12 Kohlenstoffatomen sind,
Y ein organischer Rest von Allylphenol oder Eugenol ist,
n eine durchschnittliche Wiederholungszahl ist und eine ganze Zahl von 20 bis 600 ist und
0,01 bis 1 Massenteile von (B) einem Antioxidans auf Phosphorbasis.

**2.** Batteriepack nach Anspruch 1, worin $R^3$ und $R^4$ in der strukturellen Einheit mit der allgemeinen Formel (II) jeweils Methylgruppen sind.

**3.** Batteriepack nach Anspruch 1 oder 2, worin die Polycarbonatzusammensetzung weiterhin 0,01 bis 0,15 Massenteile von (C) einem Alkalimetallsalz und/oder Erdalkalimetallsalz einer Organosulfonsäure und/oder 0,01 bis 1 Massenteil von (D) einem gemischten Pulver enthält, das sich aus Polytetrafluorethylenteilchen und organischen Polymerteilchen zusammensetzt.

**4.** Verwendung einer Polycarbonatharz-Zusammensetzung wie in einem der Ansprüche 1 bis 3 definiert, für ein Batteriepack.

**Revendications**

**1.** Bloc-batterie comprenant un boîtier supérieur et un boîtier inférieur dans lequel le boîtier supérieur et le boîtier inférieur sont liés par soudage par ultrasons d'une composition de résine de polycarbonate, comprenant :

100 parties en masse (A) d'une résine à base de polycarbonate composée de 5 à 100 % en masse d'un copolymère de polycarbonate-polyorganosiloxane (A-1) dont la chaîne principale est formée d'un motif structurel représenté par la formule générale (I) et d'un motif structurel représenté par la formule générale (II), et qui contient 2 à 10 % en masse d'une séquence de polyorganosiloxane, et de 0 à 95 % en masse d'un polycarbonate aromatique (A-2), sauf le copolymère (A-1) :

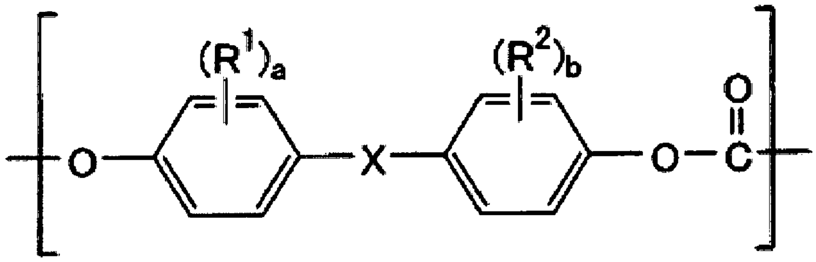

(I)

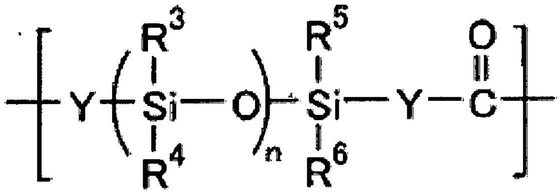

(II)

dans lequel le motif structurel représenté par la formule générale (I) est un motif structurel dérivé du bisphénol A, $R^3$ à $R^6$ représentent chacun indépendamment un atome d'hydrogène, un atome d'halogène, un groupe alkyle contenant 1 à 6 atomes de carbone, un groupe alcoxy contenant 1 à 6 atomes de carbone, ou un groupe aryle contenant 6 à 12 atomes de carbone,
Y représente un résidu organique provenant de l'allylphénol ou de l'eugénol,
n représente un nombre moyen de répétitions et représente un nombre entier allant de 20 à 600, et
0,01 à 1 partie en masse (B) d'un antioxydant à base de phosphore.

**2.** Bloc-batterie selon la revendication 1, dans lequel à la fois $R^3$ et $R^4$ dans le motif structurel représenté par la formule générale (II) représentent des groupes méthyle.

**3.** Bloc-batterie selon la revendication 1 ou 2, dans lequel la composition de polycarbonate comprend en outre 0,01 à 0,15 partie en masse (C) d'un sel de métal alcalin et/ou d'un sel de métal alcalino-terreux d'un acide organo-sulfonique, et/ou 0,1 à 1 partie en masse (D) d'une poudre mixte composée de particules de polytétrafluoroéthylène et de particules de polymère organique.

**4.** Utilisation d'une composition de résine de polycarbonate telle que définie dans l'une quelconque des revendications 1 à 3 pour un bloc-batterie.

【FIG. 1】

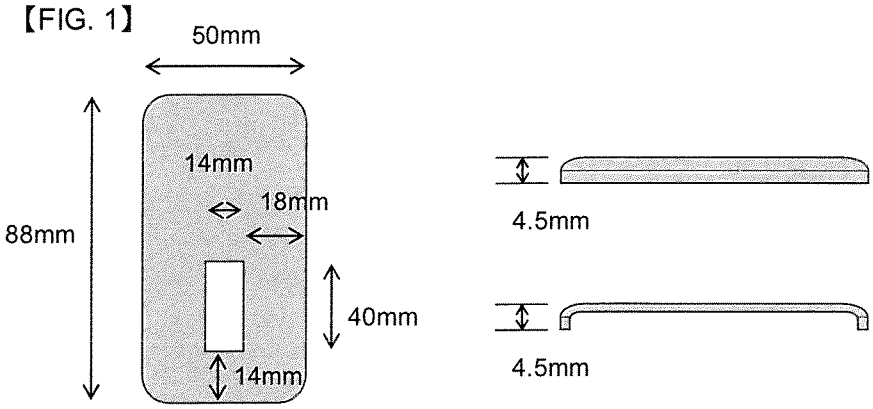


【FIG.2】

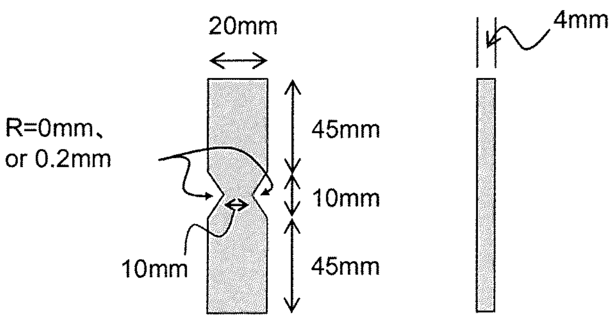


【FIG.3】

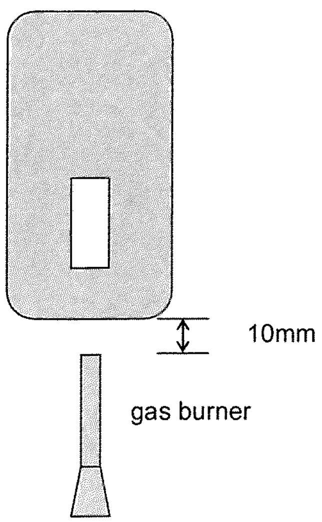

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 11021441 A
- JP 11293103 A
- JP 2004035661 A
- JP 2011021127 A
- JP 2006012657 A
- JP 47040445 B